Europäisches Patentamt

European Patent Office

Office européen des brevets

(11) Veröffentlichungsnummer: **0 229 906**
**B1**

(12) **EUROPÄISCHE PATENTSCHRIFT**

(45) Veröffentlichungstag der Patentschrift:
26.07.89

(51) Int. Cl.⁴: **F16J 15/32**

(21) Anmeldenummer: 86115486.2

(22) Anmeldetag: 07.11.86

(54) Dichtring.

(30) Priorität: 18.01.86 DE 8601130 U

(43) Veröffentlichungstag der Anmeldung:
29.07.87 Patentblatt 87/31

(45) Bekanntmachung des Hinweises auf die Patenterteilung:
26.07.89 Patentblatt 89/30

(84) Benannte Vertragsstaaten:
DE FR GB SE

(56) Entgegenhaltungen:
AU-B- 547 052
DE-A- 1 750 427
FR-E- 58 173
US-A- 3 325 175
US-A- 3 955 859

F.Schmid u.a., Handbuch der Dichtungstechnik,
Seite 238/239, 27.10.1980

(73) Patentinhaber: Firma Carl Freudenberg, Höhnerweg 4,
D-6940 Weinheim/Bergstrasse(DE)

(72) Erfinder: Blesing, Dieter, Im Klingen 9,
D-6149 Fürth 4(DE)

(74) Vertreter: Weissenfeld-Richters, Helga, Dr.,
Höhnerweg 2, D-6940 Weinheim/Bergstrasse(DE)

ACTORUM AG

## Beschreibung

Die Erfindung betrifft einen Dichtring für einen sich in einem Wanddurchbruch hin- und herbewegenden, säulenförmigen Körper, bestehend aus einem in dem Wanddurchbruch festlegbaren Grundkörper aus elastomerem Werkstoff, der im Bereich des Innenumfanges mit zwei einander entgegengesetzten, in axialer Richtung vorspringenden Dichtlippen und einer in radialer Richtung nach innen vorspringenden Abstreiflippe versehen ist, wobei die Dichtlippen und die Abstreiflippe den abzudichtenden Körper mit einer elastischen Vorspannung berühren.

Ein solcher Dichtring ist bekannt aus den Seiten 238/239 des Handbuches der Dichtungstechnik, E. Schmid u.a., veröffentlicht am 27.10.1980. Die dem relativ bewegten Körper zugewandten Zwischenräume zwischen den Dichtlippen und der Abstreiflippe sind mit Fett gefüllt, um eine Beschädigung bei der Einleitung von Querkräften oder eine Beaufschlagung mit entölter Druckluft zu vermeiden. Die Ausführung ist indessen noch verbesserungsbedürftig in bezug auf Anwendungen, in denen das abzudichtende Medium einem erhöhten Druck nicht ausgesetzt ist.

Aus der US-A 3 955 859 ist ein Dichtring zur Verwendung im Bereich von drehenden Wellen bekannt, bei dem der Grundkörper im Bereich seines Innenumfanges mit zwei in axialer Richtung vorspringenden Dichtlippen versehen ist sowie einer geneigt nach innen vorspringenden Abstreiflippe, welche innenseitig von zwei einander durchneidenden Kegelflächen begrenzt ist, die mit der Erstreckung der abzudichtenden Welle einen spitzen Winkel einschließen. Die Abstreiflippe ist ebenso wie die Dichtlippen von einer Kerbe oder einer Bohrung axial durchschnitten.

Abzudichtendes Medium vermag hierdurch den Dichtspalt zu passieren.

Aus der FR-A 58 173 ist ein Servoantrieb bekannt, bei dem der enthaltene Kolben durch einen Dichtring aus gummielastischem Werkstoff gegenüber der umschließenden Zylinderwandung abgedichtet ist. Der Dichtring weist zwei in axialer Richtung vorspringende Dichtlippen auf sowie im mittleren Bereich zwischen den Dichtlippen einen Ringvorsprung von halbkreisförmigem Profil. Der Zwischenraum zwischen den Dichtlippen und der Zylinderwandung wird hierdurch in zwei Teilbereiche unterteilt. Abzudichtendes Medium vermag ihn leicht zu überschreiten. Für das erzielte Abdichtungsergebnis ist das Vorhandensein des Ringvorsprunges ohne Bedeutung.

Der Erfindung liegt die Aufgabe zugrunde, einen Dichtring der eingangs genannten Art derart weiterzuentwickeln, daß ein gutes Abdichtungsergebnis auch dann gewährleistet ist, wenn das abzudichtende Medium nicht unter einem über den atmosphärischen Druck erhöhten Druck steht.

Diese Aufgabe wird erfindungsgemäß mit den kennzeichnenden Merkmalen des Patentanspruches 1 gelöst. Auf vorteilhafte Ausgestaltungen nehmen die Unteransprüche Bezug.

Hierdurch wird ein ausgezeichnetes Abdichtungsergebnis auch dann erzielt, wenn die alleinige Abdichtwirkung der in axialer Richtung vorspringenden Dichtlippen noch nicht ausreicht.

Der Grundkörper des erfindungsgemäßen Dichtringes hat ein im wesentlichen quadratisches Profil, wobei jedoch eine geringfügige Abweichung ohne nennenswerte Bedeutung ist. Sie kann in axialer Richtung und in radialer Richtung bis zu maximal 20% betragen.

Eine beispielhafte Ausführung des erfindungsgemäßen Dichtringes ist in der als Anlage beigefügten Zeichnung dargestellt. Sie wird nachfolgend näher erläutert:

Der gezeigte Dichtring ist in halbgeschnittener Darstellung wiedergegeben. Er besteht aus dem Grundkörper 1 aus gummielastischem Werkstoff, in den im Bereich seines Außenumfanges der Versteifungsring 2 aus einem metallischen Werkstoff eingebettet ist.

Aus dem Grundkörper 1 ragen im Bereich seines Umfanges beiderseits axial vorspringende Dichtlippen vor, die nach dem Einbau unter einer radial gerichteten Vorspannung an der Oberfläche des abzudichtenden Körpers anliegen. Sie sind einstückig mit dem Grundkörper 1 ausgebildet.

Der Grundkörper ist im Bereich seines Außenumfanges einseitig zu einem axialen Ringvorsprung erweitert, in den der Versteifungsring 2 hineinragt. Neben einer besonders guten statischen Abdichtung gegenüber dem aufnehmenden Wanddurchbruch wird hierdurch eine präzise Zuordnung des Dichtringes zu demselben gewährleistet.

Der Grundkörper 1 ist etwa in der Mitte seiner axialen Erstreckung mit einer in radialer Richtung nach innen vorspringenden Abstreiflippe 3 versehen, deren Dichtkante durch zwei einander durchneidende Kegelflächen gebildet wird. Bei einer Ausführung zur gegenseitigen Abgrenzung eines auf der einen Seite Wasser und auf der anderen Seite Öl enthaltenden Raumes hat es sich als zweckmäßig erwiesen, wenn die dem Öl enthaltenden Raum zugewandte Kegelfläche einen Kegelwinkel aufweist, der wenigstens doppelt so groß ist wie der Kegelwinkel der gegenüberliegenden Kegelfläche. Die Dichtlippe liegt nach dem Einbau des Dichtringes unter einer elastischen Vorspannung an der Oberfläche des abzudichtenden Körpers an.

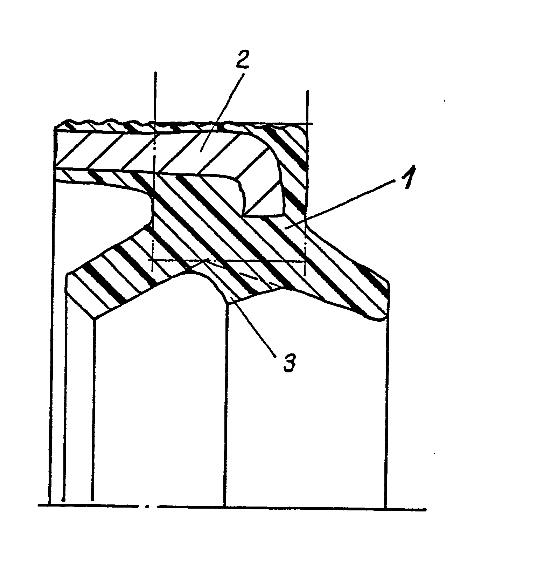

## Patentansprüche

1. Dichtring für einen sich in einem Wandurchbruch hin- und herbewegenden, säulenförmigen Körper, bestehend aus einem in dem Wanddurchbruch festlegbaren Grundkörper dadurch gekennzeichnet, aus elastomerem Werkstoff, der im Bereich des Innenumfanges mit zwei einander entgegengesetzten, in axialer Richtung vorspringenden Dichtlippen und einer in radialer Richtung nach innen vorspringenden Abstreiflippe (3) versehen ist, wobei die Dichtlippen und die Abstreiflippe (3) den abzudichtenden Körper mit einer elastischen Vorspannung berühren, und daß der Grundkörper (1) ein im wesentlichen quadratisch begrenztes Profil aufweist dadurch gekennzeichnet, daß die Abstreiflippe (3) etwa in der Mitte der axialen Erstreckung des Grundkörpers (1) angeordnet ist, daß die Abstreiflippe (3) innenseitig von zwei einander durchschneidenden Kegelmantelflächen begrenzt ist und daß die Kegelmantelflächen mit der zur Bewegungsrichtung parallelen Oberflächenerzeugenden des säulenförmigen Körpers im Axialschnitt jeweils einen spitzen Winkel einschließen.

2. Dichtring nach Anspruch 1, dadurch gekennzeichnet, daß in den Grundkörper (1) ein im wesentlichen zylindrisch ausgebildeter Versteifungsring (2) eingebettet ist.

3. Dichtring nach Anspruch 2, dadurch gekennzeichnet, daß der Versteifungsring (2) im Bereich des Außenumfanges in den Grundkörper (1) eingebettet ist.

## Claims

1. A sealing ring for a columnar body moving to and fro in a wall opening, comprising a basic body (1) of elastomeric material which can be fixed in the wall opening and is provided in the region of the inner periphery with two mutually opposite sealing lips projecting in the axial direction and one stripping lip (3) projecting inwards in the radial direction, the sealing lips and the stripping lip (3) touching the body to be sealed with a resilient pre-stress and the basic body (1) having an essentially square-bounded profile, characterized in that the stripping lip (3) is arranged approximately in the centre of the axial extension of the basic body (1), in that the stripping lip (3) is bounded on the inside by two mutually intersecting cone envelope surfaces and in that, in axial section, the cone envelope surfaces in each case enclose an acute angle with the surface generator, parallel to the direction of movement, of the columnar body.

2. A sealing ring according to claim 1, characterized in that a stiffening ring (2) of essentially cylindrical design is embedded in the basic body (1).

3. A sealing ring according to claim 2, characterized in that the stiffening ring (2) is embedded in the basic body (1) in the region of the outer periphery.

## Revendications

1. Bague d'étanchéité pour un corps en forme de colonne se déplaçant d'un mouvement alternatif à travers l'orifice d'une paroi constituée d'une base (1) en matériau élastomère pouvant se fixer dans l'orifice de la paroi qui présente, dans la zone de sa périphérie intérieure, deux lèvres d'étanchéité opposées l'une à l'autre et faisant saillie en direction axiale et une lèvre de raclage (3) faisant saillie vers l'intérieur en direction radiale, tandis que les lèvres d'étanchéité et la lèvre de raclage (3) viennent au contact du corps à rendre étanche avec précontrainte élastique et que la base (1) présente un profil essentiellement carré, caractérisée en ce que la lèvre de raclage (3) est disposée à peu près au milieu de l'extension axiale de la base (1), que la lèvre de raclage (3) est délimitée intérieurement par deux surfaces coniques sécantes et que les surfaces coniques forment un angle aigu en coupe axiale avec les génératrices de la surface parallèle en direction de déplacement du corps en forme de colonne.

2. Bague d'étanchéité selon la revendication 1, caractérisée en ce qu'une bague de renfort (2) de forme essentiellement cylindrique est insérée dans la base (1).

3. Bague d'étanchéité selon la revendication 2, caractérisée en ce que la bague de renfort (2) est insérée dans la zone de la périphérie extérieure de la base (1).